# EUROPÄISCHE PATENTSCHRIFT

(11) **EP 3 659 222 B1**
(45) Veröffentlichungstag und Bekanntmachung des Hinweises auf die Patenterteilung: **02.12.2020**
(21) Anmeldenummer: 18833603.6
(22) Anmeldetag: 17.12.2018
(51) Int. Cl.: H02B 1/30

(54) **ANORDNUNG MIT ZWEI ÜBER EINEN ANREIHVERBINDER MITEINANDER VERBUNDENEN SCHALTSCHRANKRAHMENGESTELLEN**
ARRANGEMENT WITH TWO CABINET FRAMES CONNECTED THROUGH A BAYING CONNECTOR
AGENCEMENT AVEC DEUX CHÂSSIS D'ARMOIRE CONNECTÉS PAR UN DISPOSITIF D'ASSEMBLAGE

(30) Priorität: 05.02.2018 DE 202018100613 U
(43) Veröffentlichungstag der Anmeldung: 03.06.2020
(73) Patentinhaber: Rittal GmbH & Co. KG, 35745 Herborn (DE)
(72) Erfinder: REUTER, Wolfgang, 56479 Liebenscheid (DE); SCHINDLER, Timo, 35075 Gladenbach (DE); HOF, Michael, 35708 Haiger (DE)
(74) Vertreter: Angerhausen, Christoph
(86) Internationale Anmeldenummer: PCT/DE2018/101026
(87) Internationale Veröffentlichungsnummer: WO 2019/149300

(56) Entgegenhaltungen:
- EP-A1- 1 601 074
- DE-A1-102008 034 775
- DE-U1- 29 723 544
- US-A1- 2001 050 516

## Beschreibung

Die Erfindung geht aus von einer Anordnung, die zwei über einen Anreihverbinder miteinander verbundene Schaltschrankrahmengestelle aufweist, wobei die Schaltschrankrahmengestelle jeweils einen Profilsteg aufweisen, die in einer ersten gemeinsamen Ebene liegen und über die die Schaltschrankrahmengestelle aneinandergrenzen. Die Schaltschrankrahmengestelle weisen jeweils eine Montageseite auf, die in einer zweiten gemeinsamen Ebene liegen und jeweils einem Innenraum der miteinander verbundenen Schaltschrankrahmengestelle zugewandt sind, wobei sich die erste und die zweite Ebene parallel zueinander erstrecken und voneinander beabstandet sind. Eine derartige Anordnung ist aus der DE 10 2014 101 401 A1 oder der US2001/050516 A1 bekannt.

Die aus dem Stand der Technik bekannten Anordnungen haben den Nachteil, dass der Anreihverbinder außerhalb des Dichtbereichs der aneinandergereihten Schaltschrankrahmengestelle angeordnet und damit von einer Außenseite der Anordnung her zugänglich und folglich nicht gegen Sabotage gesichert ist. Weiterhin sind Anreihverbinder bekannt, die von der Innenseite der Schaltschrankrahmengestelle her montiert werden, dann jedoch bis in das lichte Einbaumaß der Schaltschrankanordnung hineinragen und damit den wertvollen Einbauraum im Innern der Schaltschrankrahmengestelle teilweise unnutzbar machen.

Es ist daher die Aufgabe der Erfindung, eine Anordnung der eingangs beschriebenen Art derart weiterzuentwickeln, dass sie einerseits sabotagesicher und andererseits platzsparend ausgebildet ist.

Diese Aufgabe wird durch eine Anordnung mit den Merkmalen des Anspruchs 1 gelöst. Die abhängigen Ansprüche betreffen jeweils vorteilhafte Ausführungsformen der Erfindung. Demgemäß ist vorgesehen, dass der Anreihverbinder vollständig zwischen der ersten und der zweiten Ebene angeordnet ist. Dadurch wird erreicht, dass der Anreihverbinder sowohl dem Innern der Schaltschrankrahmengestelle zugewandt und im Übrigen noch hinter einer hintersten Montageebene der Schaltschrankrahmengestelle, die in der zweiten gemeinsamen Ebene der Montageseiten der Schaltschrankrahmengestelle liegt, angeordnet ist und damit den Einbauraum im Innern der Schaltschrankrahmengestelle nicht einschränkt.

Der Anreihverbinder weist einen Korpus mit gegenüberliegenden Anlageseiten auf, mit denen er an jeweils einer weiteren Profilseite, die sich zwischen der ersten und der zweiten Ebene und senkrecht zu diesen erstreckt, anliegt. Insbesondere kann vorgesehen sein, dass die weitere Profilseite die Montageseite mit dem Profilsteg verbindet. Die Montageseite kann über eine 90°-Abkantung von der weiteren Profilseite abgekantet sein. Ebenso kann der Profilsteg über eine 90°-Abkantung von der weiteren Profilseite abgekantet sein. Insbesondere können die Montageseite und der Profilsteg in gegenüberliegende

Richtungen von der weiteren Profilseite abgekantet sein. Der Profilsteg und die Montageseite können über eine Abmessung der weiteren Profilseite voneinander beabstandet sein, die sich senkrecht zu dem Profilsteg und der Montageseite erstreckt. Die weitere Profilseite kann eine Systemlochung aus regelmäßig beabstandeten Befestigungsdurchlässen aufweisen. Das Schaltschrankrahmengestell kann insbesondere aus umlaufend identischen Profilen ausgebildet sein. Ein geeignetes Schaltschrankrahmengestell ist aus der DE 10 2015 121 192 A1 bekannt ist.

Mindestens ein Schraubkanal kann sich über die gesamte Länge des Anreihverbinders zwischen den Anlageseiten und durch die Anlageseiten hindurch erstrecken. Es kann insbesondere vorgesehen sein, dass der Schraubkanal über die gesamte Länge zwischen den Anlageseiten kontinuierlich ausgebildet ist, das heißt ohne Unterbrechungen, um eine präzise Führung eines Schraubbolzens zu erreichen.

Der Anreihverbinder kann weiterhin mindestens einen Zentrierstift aufweisen, der sich von mindestens einer der Anlageseiten und senkrecht zu dieser erstreckt. Der Zentrierstiftkann insbesondere an seinem Außenumfang eine Kontur aufweisen, die der Kontur eines Durchbruchs oder Befestigungsdurchlasses durch die weitere Profilseite des Schaltschrankrahmengestells entspricht. Der Zentrierstift kann insbesondere formschlüssig in dem Durchbruch oder Befestigungsdurchlass aufgenommen sein. Der Zentrierstift kann derart in Bezug auf den mindestens einen Schraubkanal positioniert sein, dass eine definierte Ausrichtung der Schraubkanäle des Anreihverbinders in Bezug auf weitere Durchbrüche in der weiteren Profilseite erreicht wird, so dass die Schraubkanäle mit den Durchbrüchen für die Einführung eines Schraubbolzens miteinander fluchten.

Von mindestens einer der Anlageseiten erstreckt sich mindestens ein Rastvorsprung durch einen Befestigungsdurchlass in einer der weiteren Profilseiten und verrastet den Anreihverbinder an der weiteren Profilseite. Die Befestigungsdurchlässe können Bestandteil einer Systemlochung der weiteren Profilseite sein. Die Systemlochung kann Befestigungsdurchlässe aufweisen, die sich unter einem festen Rastermaß zueinander entlang einer Geraden erstrecken. Es können sich mehrere Rastvorsprünge von mindestens einer der Anlageseiten erstrecken, wobei die Rastvorsprünge einen Abstand zueinander aufweisen, der einem ganzzahligen Vielfachen des Rastermaßes entspricht. Eine geeignete Systemlochung ist in der DE 10 2015 121 192 A1 beschrieben.

Der Rastvorsprung kann eine Gleitfläche aufweisen, die sich von einer der Anlageseiten und senkrecht zu dieser erstreckt und einem Haken des Rastvorsprungs gegenüberliegend angeordnet ist, wobei die Gleitfläche an einer Berandung des Befestigungsdurchlasses, durch den sich der Rastvorsprung erstreckt, formschlüssig anliegt.

Mindestens ein Schraubkanal kann sich über die gesamte Länge des Anreihverbinders zwischen den Anlageseiten und durch die Anlageseiten hindurch erstrecken, wobei der mindestens eine Schraubkanal mit dem mindestens einen Rastvorsprung fluchtet und durch den Rastvorsprung hindurch fortgesetzt ist.

Ein Schraubbolzen kann von einer äußeren Profilseite des Schaltschrankrahmengestells, die parallel beabstandet zu der weiteren Profilseite angeordnet ist, durch einen geschlossenen Profilabschnitt des Schaltschrankrahmengestells hindurchgeführt sein. Dazu kann das Schaltschrankrahmengestell wiederum eine Geometrie aufweisen, wie sie aus der DE 10 2015 121 192 A1 bekannt ist.

Der Schraubbolzen kann über eine äußere Profilseite in den geschlossenen Profilabschnitt eintreten und über die weitere Profilseite aus dem geschlossenen Profilabschnitt austreten und über eine von zwei gegenüberliegenden Anlageseiten des Anreihverbinders in den Anreihverbinder eintreten.

Dabei kann der Schraubbolzen zumindest in einem vom Schraubbolzenkopf abgewandten Endabschnitt ein Außengewinde aufweisen, mit dem er in den mindestens einen Schraubkanal, der ein Innengewinde aufweist, eingeschraubt ist.

Der Schraubbolzen kann mit einem Schraubbolzenkopf an der äußeren Profilseite anliegen.

Der Anreihverbinder kann eine Montageseite mit einer Lochreihe aus äquidistant beabstandeten Befestigungsdurchlässen aufweisen, die in der zweiten gemeinsamen Ebene der Montageseite liegen bzw. sich durch diese hindurch erstrecken.

Dabei können die Befestigungsdurchlässe einen Abstand zueinander aufweisen, der dem Rastermaß einer Systemlochung der Schaltschrankrahmengestelle entspricht.

Die Befestigungsdurchlässe des Anreihverbinders können entlang einer linearen Lochreihe angeordnet und identisch zu Befestigungsdurchlässen der Systemlochung ausgebildet sein, wobei die Befestigungsdurchlässe des Anreihverbinders und mindestens ein identischer Befestigungsdurchlass der Systemlochung entlang einer Geraden angeordnet sind, wobei ein Abstand zwischen jedem der Befestigungsdurchlässe des Anreihverbinders und dem mindestens einen Befestigungsdurchlass der Systemlochung einem ganzzahligen Vielfachen des Rastermaßes entspricht.

Die Profilstege können unter Ausbildung eines Dichtspaltes aneinandergrenzen und als identische und sich zu ihrem freien Ende hin aufweitende Dichtstege ausgebildet sein, wobei auf einen der Dichtstege eine Aufsteckdichtung aufgesteckt ist, die den Dichtspalt fluidisch dicht abschließt.

Die Anlageseiten des Anreihverbinders können einen Abstand aufweisen, der geringfügig größer als die Summe der Länge der Profilstege ist, wobei die Aufsteckdichtung eine definierte Kompression aufweist, wenn die weiteren Profilseiten an den gegenüberliegenden Anlageseiten des Anreihverbinders anliegen.

Für die Befestigung der Rahmengestelle aneinander kann der Zentrierstift zum Positionieren des Anreihverbinders an einem ersten der beiden miteinander zu verbindenden Rahmengestelle dienen, beispielsweise an einem ersten Vertikalprofil des Rahmengestells, so dass zwei über die äußere Profilseite eingesetzte und als Schaftschrauben ausgebildete Gewindebolzen in die Schraubkanäle des Anreihverbinders eingeschraubt werden können. Damit ist der Anreihverbinders an dem ersten der beiden Rahmengestelle festgelegt

Anschließend kann das zweite der beiden Rahmengestelle an das erste Rahmengestell angereiht werden, indem die zwei Rastvorsprünge des Anreihverbinders in jeweils einen Befestigungsdurchlass eingeschoben werden.

Wenn die Rastvorsprünge die Schraubkanäle verlängern, haben sie die Funktion einer Einführungshilfe für weitere Schraubbolzen, die über die äußere Profilseite des zweiten Rahmengestells eingeschoben werden. Die Rastvorsprünge können sich dazu um eine Abmessung in den geschlossenen Profilabschnitt hinein erstrecken. Diese Abmessung kann entsprechend dem Abstand der äußeren Profilseite zu der weiteren Profilseite derart angepasst ist, dass eine ausreichende Führung des Schraubbolzens für eine einfache Befestigung des zweiten Rahmengestells an dem Anreihverbinder gewährleistet ist.

Der Zentrierstift kann eine Länge senkrecht zu der Anlagesite, von der er sich aus erstreckt, aufweisen, die so bemessen ist, dass sich der Anreihverbinder auch noch nachträglich einbauen lässt, das heißt, wenn die Rahmengestelle in der Anreihsituation zwar dicht aneinander stehen, die übrigen Anreihverbinder, die eventuell vorhanden sind, über ihre Schraubbolzen zwar vormontiert, die Bolzen jedoch noch nicht angezogen sind, so dass das Dichtelement noch nicht komprimiert ist und somit ein ausreichender Abstand für das Einsetzen des Anreihverbinders zwischen den einander zugewandten weiteren Profilseiten besteht.

Dies kann dadurch weiter begünstigt werden, dass die Rastvorsprünge nur in einer Dimension formschlüssig in den Befestigungsdurchlässen aufgenommen sind. In der Dimension parallel zu den Befestigungsdurchlässen können die Rastvorsprünge kleiner bemessen sein als die Befestigungsdurchlässe, so dass die Rastvorsprünge über eine Drehbewegung in der Ebene senkrecht zu der Ebene der Befestigungsdurchlässe in die Befestigungsdurchlässe eingedreht werden können.

Der Schaft des Befestigungsbolzens kann angrenzend an seinen Bolzenkopf einen Durchmesser aufweisen, der einem Abstand gegenüber liegender Seiten des Befestigungsdurchlasses in der äußeren Profilseite entspricht, über den der Befestigungsbolzen in das Rahmengestell eingesetzt ist. Dieser aufgeweitete Schaftabschnitt erstreckt sich nicht bis zu der weiteren Profilseite, sondern dient nur im Befestigungsdurchlass, der ein Rechteckloch sein kann, der äußeren Profilseite als Auflage zur einfacheren Positionierung des Befestigungsbolzens.

Weitere Einzelheiten der Erfindung werden anhand der nachstehenden Figuren erläutert. Dabei zeigt:
- Figur 1: in perspektivischer Darstellung eine Sicht auf die Innenseite einer erfindungsgemäßen Anordnung gemäß einer Ausführungsform der Erfindung; und
- Figur 2: eine Detailansicht des Anreihverbinders gemäß Figur 1.

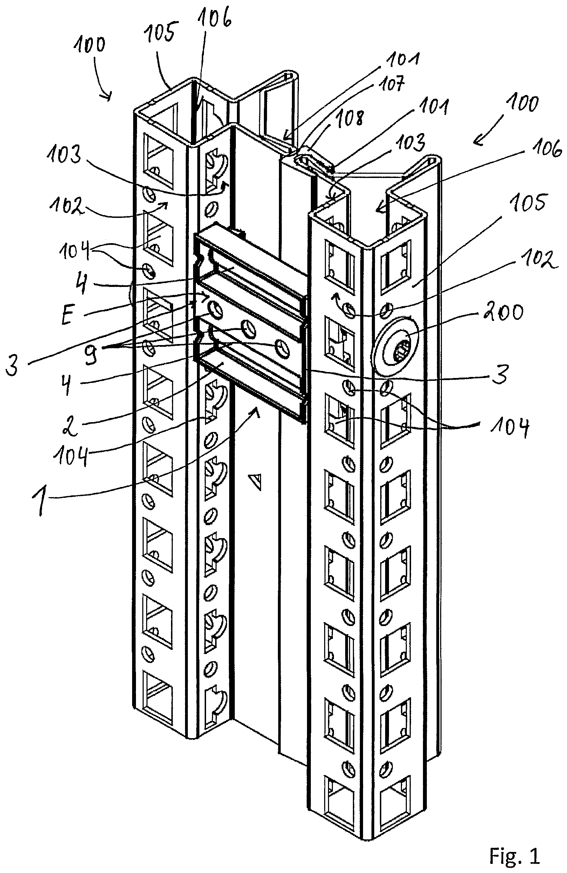

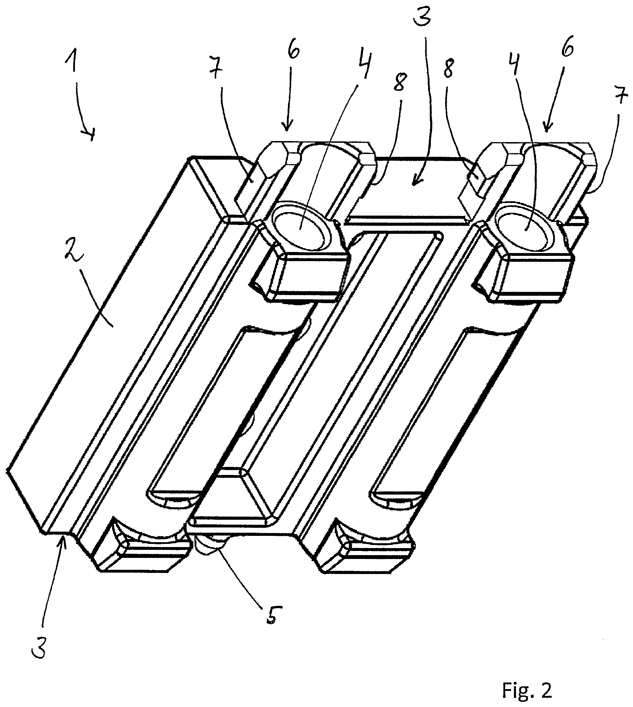

In den Figuren 1 und 2 ist eine Ausführungsform der erfindungsgemäßen Anordnung wiedergegeben. Dabei sind zwei Schaltschrankrahmengestelle 100 an ihrer zum Inneren der Schaltschrankrahmengestelle 100, das heißt zum Einbauraum der Schaltschrankrahmengestelle 100 gerichteten Seite über einen Anreihverbinder 1 miteinander verbunden. Die Schaltschrankrahmengestelle 100 grenzen über sich gegenüberstehende Profilstege 101 aneinander, die in einer ersten gemeinsamen Ebene angeordnet sind. Die Profilstege 101 sind als Dichtstege ausgebildet mit einem zwischen sich angeordneten Dichtelement 8, so dass die erste gemeinsame Ebene eine Dichtebene der Anordnung bildet. Folglich ist der Anreihverbinder 1 über die Dichtebene von äußeren Umwelteinflüssen und Zugriff geschützt.

Der Anreihverbinder 1 ist insbesondere zwischen der zuvor beschriebenen Dichtebene und einer zweiten gemeinsamen Ebene der Montageseiten 102 der Schaltschrankrahmengestelle platzsparend angeordnet. Die zweite gemeinsame Ebene, die durch die Montageseiten 102 definiert wird, ist gerade die hinterste Montageebene der Schaltschrankrahmengestelle 100. Da der Anreihverbinder 1 vollständig hinter der durch die zweite gemeinsame Ebene gebildeten Montageebene liegt beziehungsweise mit seiner Vorderseite genau in der zweiten gemeinsamen Ebene liegt, ist der Anreihverbinder 1 platzsparend angeordnet und kann insbesondere auch überbaut werden, ohne dass die den Anreihverbinder 1 überbauende Komponente mit dem Anreihverbinder 1 kollidieren könnte.

Das Schaltschrankrahmengestell 100 ist entsprechend dem aus der DE 10 2015 121 192 A1 bekannten Schaltschrankrahmengestell ausgebildet. Jedes der miteinander verbundenen Schaltschrankrahmengestelle 100 weist eine weitere Profilseite 103 auf, die die jeweilige Montageseite 102 mit dem jeweiligen Profilsteg 101 über jeweils eine 90°-Abkantung verbindet. Der weiteren Profilseite 103 gegenüberliegend ist von der Montageseite 102 eine äußere Profilseite 105 über eine weitere 90°-Abkantung von der Montageseite 102 abgekantet. Über die äußere Profilseite 105 ist ein Schraubbolzen 200 durch einen geschlossene Profilabschnitt 106 des Schaltschrankrahmengestells 100 hindurchgeführt, bis der Bolzen 200 den geschlossenen Profilabschnitt 106 über die weitere Profilseite 103 verlässt und dort unmittelbar mit seinem freien Ende in einen der Schraubkanäle 4 des Anreihverbinders 1 eintritt. Die Schraubkanäle 4 weisen ein Innengewinde auf, so dass eine kraftschlüssige Verbindung zwischen dem Schaltschrankrahmengestell 100 und dem Anreihverbinder 1 hergestellt werden kann. Im Rahmen der Verschraubung wird eine definierte Kompression der Aufsteckdichtung 108 derart realisiert, dass die Länge des Anreihverbinders 1, das heißt der Abstand zwischen den Anlageseiten 3 des Anreihverbinders 1 gerade derart bemessen ist, dass ein definierter Dichtspalt 107 zwischen den freien Enden der Dichtstege 103 ausgebildet ist, wenn der Anreihverbinder 1 über seine gegenüberliegenden Anlageseite 3 an den weiteren Profilseiten 103 der Schaltschrankrahmengestelle 100 anliegt.

Der Anreihverbinder 1 weist weiterhin eine Montageebene E mit einer Systemlochung aus unter einem Rastermaß beabstandeten kreisrunden Befestigungsdurchlässen 9 auf. Die Befestigungsdurchlässe 9 des Anreihverbinders 1 sind entlang einer Geraden angeordnet und weisen zu weiteren, identischen Befestigungsdurchlässen 104 der Montageseiten 102 der Schaltschrankrahmengestelle 100, die auf derselben Geraden liegen, einen Abstand auf, der einem ganzzahligen Vielfachen des Rastermaßes entspricht. Zweckmäßigerweise weist das Rastermaß der Befestigungsdurchlässe 9 des Anreihverbinders 1 gerade einen Wert auf, der dem Rastermaß der Befestigungsdurchlässe 104 der Schaltschrankrahmengestelle 100 entspricht, so dass auch über die Montageebene E des Anreihverbinders 1 und somit über die angrenzenden Schaltschrankrahmengestelle 100 hinweg das Rastermaß der Schaltschrankrahmengestelle 100 erhalten bleibt. Dies hat den Vorteil, dass Ausbaukomponenten, deren Befestigungsmittel dazu eingerichtet sind, an einer Systemlochung von Schaltschrankrahmengestellen 100 festgelegt zu werden, auch über aneinandergrenzender Schaltschrankrahmengestelle 100 hinweg montiert werden können. Beispielsweise kann sich eine Schaltschrankleuchte zwischen den aneinandergrenzenden Schaltschrankrahmengestellen 100 der Anordnung erstrecken und mit einem ersten ihrer gegenüberliegenden Enden in einem ersten der Schaltschrankrahmengestelle 100 und mit einem zweiten ihrer gegenüberliegenden Enden in einem zweiten der Schaltschrankrahmengestelle 100, das an das erste Schaltschrankrahmengestell 100 angrenzt und mithilfe des Anreihverbinders 1 festgelegt ist, befestigt sein.

Wie in Figur 2 zu erkennen ist, besteht der Anreihverbinder 1 im Wesentlichen aus einem Korpus 2 der gegenüberliegende Anlageseiten 3 aufweist. Senkrecht zu den Anlageseiten 3 erstrecken sich Schraubkanäle 4 über den gesamten Abstand zwischen den Anlageseiten 3, so dass eine kontinuierliche Führung eines Schraubbolzens 200 (siehe Figur 1) zwischen den Anlageseiten 3 gewährleistet ist. Rastvorsprünge 6 erstrecken sich von den Anlageseiten 3 und fluchten mit den Schraubkanälen 4, so dass die Schraubkanäle 4 durch die Rastvorsprünge 6 hindurch fortgesetzt sind. An gegenüberliegenden Seiten, die sich senkrecht zu der jeweiligen Anlageseite 3 erstrecken, weisen die Rastvorsprünge 6 eine Gleitfläche 7 und dieser gegenüberliegend einen Haken 8 auf. Der Haken 8 ist dazu eingerichtet, in einem montierten Zustand des Anreihverbinders 1 einen Befestigungsdurchlass 104 (siehe Figur 1) im Randbereich zu hintergreifen, wodurch die Montage des Anreihverbinders 1 vereinfacht wird.

An der weiteren Anlageseite 3, welche der Anlageseite 3 mit den Rastvorsprüngen 6 gegenüberliegend angeordnet ist, ist ein Zentrierstift 5 ausgebildet, der sich senkrecht zu der weiteren Anlageseite 3 erstreckt und an seinem Außenumfang eine Kontur aufweist, die einer Innenkontur eines Befestigungsdurchlasses 104 der weiteren Profilseite 103 (siehe Figur 1) entspricht. Der Zentrierstift 5 dient insbesondere zur Vorausrichtung der Schraubkanäle 4 in Bezug auf die weiteren Befestigungsdurchlässe 104 in der weiteren Profilseite 103.

Bei der Befestigung der Rahmengestelle 100 aneinander kann der Zentrierstift 5 zum Positionieren des Anreihverbinders 1 an einem ersten der beiden miteinander zu verbindenden Rahmengestelle 100 dienen, beispielsweise an einem ersten Vertikalprofil des Rahmengestells 100, so dass zwei über die äußere Profilseite 105 eingesetzte und als Schaftschrauben ausgebildete Gewindebolzen 200 in die Schraubkanäle 4 des Anreihverbinders 1 eingeschraubt werden können, so dass der Anreihverbinders 1 an dem ersten der beiden Rahmengestelle 100 festgelegt ist.

Anschließend kann der zweite der beiden Rahmengestelle 100 an das erste Rahmengestell 100 angereiht werden, indem die zwei Rastvorsprünge 6 des Anreihverbinders 1 in jeweils einen Befestigungsdurchlass 104 eingeschoben werden. Da die Rastvorsprünge 6 die Schraubkanäle 4 verlängern, haben sie die Funktion einer Einführungshilfe für weitere Schraubbolzen, die über die äußere Profilseite 105 des zweiten Rahmengestells 100 eingeschoben werden. Die Rastvorsprünge erstrecken sich dazu um eine Abmessung in den geschlossenen Profilabschnitt hinein, wobei die Abmessung entsprechend dem Abstand der äußeren Profilseite 105 zu der weiteren Profilseite 103 derart angepasst ist, dass eine ausreichende Führung des Schraubbolzens für eine einfache Befestigung des zweiten Rahmengestells 100 an dem Anreihverbinder 1 gewährleistet ist.

Der Zentrierstift 5 weist eine Länge senkrecht zu der Anlagesite 3, von der er sich aus erstreckt, auf, die so bemessen ist, dass sich der Anreihverbinder 1 auch noch nachträglich einbauen lässt, wenn die Rahmengestelle 100 in der Anreihsituation zwar dicht aneinander stehen, die übrigen Anreihverbinder 1, die eventuell vorhanden sind, über ihre Schraubbolzen 200 zwar vormontiert, diese jedoch noch nicht angezogen sind, so dass das Dichtelement 108 noch nicht komprimiert ist und somit ein ausreichender Abstand für das Einsetzen des Anreihverbinders zwischen den einander zugewandten weiteren Profilseiten 103 besteht. Dies wird dadurch weiter begünstigt, dass die Rastvorsprünge 6 nur in einer Dimension formschlüssig in den Befestigungsdurchlässen 104 aufgenommen sind. In der Dimension parallel zu den Befestigungsdurchlässen 104 sind die Rastvorsprünge 6 kleiner bemessen als die Befestigungsdurchlässe 104, so dass die Rastvorsprünge 6 über eine Drehbewegung in der Ebene senkrecht zu der Ebene der Befestigungsdurchlässe 104 in die Befestigungsdurchlässe 104 eingedreht werden können.

Der Schaft des Befestigungsbolzens 200 kann angrenzend an seinen Bolzenkopf einen Durchmesser aufweisen, der einem Abstand gegenüber liegender Seiten des Befestigungsdurchlasses 104 in der äußeren Profilseite 105 entspricht, über den der Befestigungsbolzen 200 in das Rahmengestell eingesetzt ist. Dieser aufgeweitete Schaftabschnitt erstreckt sich nicht bis zu der weiteren Profilseite 103, sondern dient nur im Rechteckloch der äußeren Profilseite 105 als Auflage zur einfacheren Positionierung des Befestigungsbolzens 200.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein, wie in den anhängigen Ansprüchen definiert.

### Bezugszeichenliste

- 1: Anreihverbinder
- 2: Korpus
- 3: Anlageseite
- 4: Schraubkanal
- 5: Zentrierstift
- 6: Rastvorsprung
- 7: Gleitfläche
- 8: Haken
- 9: Befestigungsdurchlass
- 100: Schaltschrankrahmengestell
- 101: Profilsteg/Dichtsteg
- 102: Montageseite
- 103: weitere Profilseite
- 104: Befestigungsdurchlass
- 105: äußere Profilseite
- 106: geschlossener Profilabschnitt
- 107: Dichtspalt
- 108: Aufsteckdichtung
- 200: Schraubbolzen
- E: Montageebene

## Patentansprüche

1. Anordnung, die zwei über einen Anreihverbinder (1) miteinander verbundene Schaltschrankrahmengestelle (100) aufweist, wobei die Schaltschrankrahmengestelle (100) jeweils einen Profilsteg (101) aufweisen, die in einer ersten gemeinsamen Ebene liegen und über die die Schaltschrankrahmengestelle (100) aneinander grenzen, und wobei die Schaltschrankrahmengestelle (100) jeweils eine Montageseite (102) aufweisen, die in einer zweiten gemeinsamen Ebene liegen und jeweils einem Innenraum der miteinander verbundenen Schaltschrankrahmengestelle (100) zugewandt sind, wobei sich die erste und die zweite Ebene parallel zueinander erstrecken und voneinander beabstandet sind, wobei der Anreihverbinder (1) vollständig zwischen der ersten und der zweiten Ebene angeordnet ist, **dadurch gekennzeichnet, dass** der Anreihverbinder (1) einen Korpus (2) mit gegenüberliegenden Anlageseiten (3) aufweist, mit denen er an jeweils einer weiteren Profilseite (103), die sich zwischen der ersten und der zweiten Ebene und senkrecht zu diesen erstreckt, anliegt, wobei sich von mindestens einer der Anlageseiten (3) mindestens ein Rastvorsprung (6) durch einen Befestigungsdurchlass (104) in einer der weiteren Profilseiten (103) erstreckt und den Anreihverbinder (1) an der weiteren Profilseite (103) verrastet.

2. Anordnung nach Anspruch 1, bei der sich mindestens ein Schraubkanal (4) über die gesamte Länge des Anreihverbinders (1) zwischen den Anlageseiten (3) und durch die Anlageseiten (3) hindurch erstreckt.

3. Anordnung nach Anspruch 1 oder 2, bei der sich ein Zentrierstift (5) von mindestens einer der Anlageseiten (3) und senkrecht zu dieser erstreckt.

4. Anordnung nach Anspruch 1, bei der der Rastvorsprung (6) eine Gleitfläche (7) aufweist, die sich von einer der Anlageseiten (3) und senkrecht zu dieser erstreckt und einem Haken (8) des Rastvorsprung (6) gegenüber liegend angeordnet ist, wobei die Gleitfläche (7) an einer Berandung des Befestigungsdurchlasses (104), durch den sich der Rastvorsprung (6) erstreckt, formschlüssig anliegt.

5. Anordnung nach Anspruch 1, bei der sich mindestens ein Schraubkanal (4) über die gesamte Länge des Anreihverbinders (1) zwischen den Anlageseiten (3) und durch die Anlageseiten (3) hindurch erstreckt, wobei der mindestens eine Schraubkanal (4) mit dem mindestens einen Rastvorsprung (6) fluchtet und durch den Rastvorsprung (6) hindurch fortgesetzt ist.

6. Anordnung nach einem der vorangegangenen Ansprüche, bei der ein Schraubbolzen (200) von einer äußeren Profilseite (105), die parallel beabstandet zu der weiteren Profilseite (103) angeordnet ist, durch einen geschlossenen Profilabschnitt (106) des Schaltschrankrahmengestells (100) hindurch geführt ist.

7. Anordnung nach Anspruch 6, bei der der Schraubbolzen (200) über die äußere Profilseite (105) in den geschlossenen Profilabschnitt (106) eintritt und über die weitere Profilseite (103) aus dem geschlossenen Profilabschnitt (105) austritt und über eine von zwei gegenüberliegenden Anlageseiten (3) des Anreihverbinders (1) in den Anreihverbinder (1) eintritt.

8. Anordnung nach Anspruch 7, bei der der Schraubbolzen (200) zumindest in einem vom Schraubbolzenkopf abgewandten Endabschnitt ein Außengewinde aufweist, mit dem er in den mindestens einen Schraubkanal (4), der ein Innengewinde aufweist, eingeschraubt ist.

9. Anordnung nach einem der Ansprüche 6 bis 8, bei dem der Schraubbolzen (200) mit seinem Schraubbolzenkopf an der äußeren Profilseite (105) anliegt.

10. Anordnung nach einem der vorangegangenen Ansprüche, bei der der Anreihverbinder (1) eine Montageebene (E) mit einer Lochreihe aus äquidistant beabstandeten Befestigungsdurchlässen (9) aufweist, die in der zweiten gemeinsamen Ebene der Montageseiten (102) liegt.

11. Anordnung nach Anspruch 10, bei der die Befestigungsdurchlässe (9) einen Abstand zueinander aufweisen, der dem Rastermaß einer Systemlochung der Schaltschrankrahmengestelle (100) entspricht.

12. Anordnung nach Anspruch 11, bei der die Befestigungsdurchlässe (9) des Anreihverbinders (1) entlang einer linearen Lochreihe angeordnet und identisch zu Befestigungsdurchlässen (104) der Systemlochung ausgebildet sind, wobei die Befestigungsdurchlässe (9) des Anreihverbinders (1) und mindestens ein identischer Befestigungsdurchlass (104) der Systemlochung entlang einer Geraden angeordnet sind, wobei ein Abstand zwischen jedem der Befestigungsdurchlässe (9) des Anreihverbinders (1) und dem mindestens einen Befestigungsdurchlass (104) der Systemlochung einem ganzzahligen Vielfachen des Rastermaßes entspricht.

13. Anordnung nach einem der vorangegangen Ansprüche, bei dem die Profilstege (101) unter Ausbildung eines Dichtspalts (107) aneinander grenzen und als identische und sich zu ihrem freien Ende hin aufweitende Dichtstege ausgebildet sind, wobei auf einen der Dichtstege eine Aufsteckdichtung (108) aufgesteckt ist, die den Dichtspalt (107) fluidisch dicht schließt.

14. Anordnung nach Anspruch 13, bei der die Anlageseiten (3) des Anreihverbinders (1) einen Abstand aufweisen der geringfügig größer als die Summe der Längen der Profilstege (101) ist, so dass die Aufsteckdichtung (108) eine definierte Kompression aufweist, wenn die weiteren Profilseiten (103) an den gegenüber liegenden Anlageseiten (3) das Anreihverbinders (1) anliegen.

## Claims

1. Arrangement, which comprises two switch cabinet racks (100) interconnected by means of a baying connector (1), the switch cabinet racks (100) each having a profile web (101), which lie in a first common plane and by means of which the switch cabinet racks (100) adjoin each other, and wherein the switch cabinet racks (100) each have a mounting side (102) which lie in a second common plane and face an interior space of the interconnected switch cabinet racks (100) each, the first and the second plane extending parallel to one another and being spaced apart from one another, wherein the baying connector (1) is completely arranged between the first and the second plane, **characterized in that** the baying connector (1) has a body (2) with opposite contact sides (3), with which it rests against a further profile side (103) each, which extends between the first and second planes and perpendicular to them, wherein at least one latching projection (6) extends from at least one of the contact sides (3) through a fastening aperture (104) in one of the further profile sides (103) and latches the baying connector (1) to the further profile side (103).

2. Arrangement according to claim 1, in which at least one screw passage (4) extends over the entire length of the baying connector (1) between the contact sides (3) and through the contact sides (3).

3. Arrangement according to claim 1 or 2, in which a centering pin (5) extends from at least one of the contact sides (3) and perpendicular to it.

4. Arrangement according to claim 1, in which the latching projection (6) has a sliding surface (7) which extends from one of the contact sides (3) and perpendicularly to it and which is arranged opposite a hook (8) of the latching projection (6), the sliding surface (7) bearing form-fittingly against an edge of the fastening aperture (104) through which the latching projection (6) extends.

5. Arrangement according to claim 1, in which at least one screw passage (4) extends over the entire length of the baying connector (1) between the contact sides (3) and through the contact sides (3), the at least one screw passage (4) being aligned with the at least one latching projection (6) and continued through the latching projection (6).

6. Arrangement according to any of the preceding claims, in which a screw bolt (200) is passed through a closed profile section (106) of the switch cabinet rack (100) from an outer profile side (105) which is arranged parallel to and spaced apart from the further profile side (103).

7. Arrangement according to claim 6, in which the screw bolt (200) enters the closed profile section (106) via the outer profile side (105) and exits the closed profile section (105) via the further profile side (103) and enters the baying connector (1) via one of two opposite contact sides (3) of the baying connector (1).

8. Arrangement according to claim 7, in which the screw bolt (200) has an external thread at least in an end section facing away from the screw bolt head, with which it is screwed into the at least one screw passage (4), which has an internal thread.

9. Arrangement according to any of claims 6 to 8, in which the screw bolt (200) bears against the outer profile side (105) with its screw bolt head.

10. Arrangement according to any of the preceding claims, in which the baying connector (1) has a mounting plane (E) with a row of holes of equidistantly spaced fastening apertures (9) lying in the second common plane of the mounting sides (109).

11. Arrangement according to claim 10, in which the fastening apertures (9) have a distance to each other which corresponds to the grid dimension of a system perforation of the switch cabinet rack (100).

12. Arrangement according to claim 11, in which the fastening apertures (9) of the baying connector (1) are arranged along a linear row of holes and are formed identical to fastening apertures (104) of the system perforation, wherein the fastening apertures (9) of the baying connector (1) and at least one identical fastening aperture (104) of the system perforation are arranged along a straight line, a distance between each of the fastening apertures (9) of the baying connector (1) and the at least one fastening aperture (104) of the system perforation being an integer multiple of the grid dimension.

13. Arrangement according to any of the preceding claims, in which the profile webs (101) adjoin each other under formation of a sealing gap (107) and are formed as identical sealing webs widening towards their free end, wherein a push-on seal (108) is pushed onto one of the sealing webs, which push-on seal seals the sealing gap fluid-tight.

14. Arrangement according to claim 13, in which the contact sides (3) of the baying connector (1) have a spacing that is slightly greater than the sum of the length of the profile webs (101), wherein the push-on seal (108) has a defined compression when the further profile sides (103) abut the opposite contact sides (3) of the baying connector (1).

## Revendications

1. Disposition, qui comprend des châssis d'armoire de commande (100) reliés entre eux par l'intermédiaire d'un connecteur d'alignement (1), dans laquelle les châssis d'armoire de commande (100) comprennent chacun une nervure profilée (101) qui se trouvent dans un premier plan commun et qui délimitent les châssis d'armoire de commande (100) entre eux et dans laquelle les châssis d'armoire de commande (100) comprennent chacun un côté de montage (102) qui se trouvent dans un deuxième plan commun et qui sont orientés chacun vers un espace interne des châssis d'armoire de commande (100) reliés entre eux, dans laquelle les premier et deuxième plans s'étendent parallèlement entre eux et sont distants entre eux, dans laquelle le connecteur d'alignement (1) est disposé entièrement entre les premier et deuxième plans, **caractérisée en ce que** le connecteur d'alignement (1) comprend un corps (2) avec des côtés d'appui (3) opposés, avec lesquels il s'appuie respectivement contre un autre côté profilé (103) qui s'étend entre les premier et deuxième plans et perpendiculairement à ceux-ci, dans laquelle, à partir d'au moins un des côtés d'appui (3), s'étend au moins une saillie d'encliquetage (6) à travers un passage de fixation (104) dans un des autres côtés profilés (103) et encliquette le connecteur d'alignement (1) à l'autre côté profilé (103).

2. Disposition selon la revendication 1, dans laquelle au moins un canal de vissage (4) s'étend sur toute la longueur du connecteur d'alignement (1) entre les côtés d'appui (3) et à travers les côtés d'appui (3).

3. Disposition selon la revendication 1 ou 2, dans laquelle une goupille de centrage (5) s'étend à partir d'au moins un des côtés d'appui (3) et perpendiculairement à celui-ci.

4. Disposition selon la revendication 1, dans laquelle la saillie d'encliquetage (6) comprend une surface de glissement (7) qui s'étend à partir d'un des côtés d'appui (3) et perpendiculairement à celui-ci et qui est disposée en face d'un crochet (8) de la saillie d'encliquetage (6), dans laquelle la surface de glissement (7) s'appuie par complémentarité de forme contre un rebord du passage de fixation (104), à travers lequel s'étend la saillie d'encliquetage (6).

5. Disposition selon la revendication 1, dans laquelle au moins un canal de vissage (4) s'étend sur toute la longueur du connecteur d'alignement (1) entre les côtés d'appui (3) et à travers les côtés d'appui (3), dans laquelle d'au moins un canal de vissage (4) est aligné avec l'au moins une saillie d'encliquetage (6) et est prolongée à travers la saillie d'encliquetage (6).

6. Disposition selon l'une des revendications précédentes, dans laquelle une tige filetée (200) est guidée à partir d'un côté profilé externe (105), qui est disposé de manière distante parallèlement à l'autre côté profilé (103), à travers une portion profilée fermée (106) du châssis d'armoire de commande (100).

7. Disposition selon la revendication 6, dans laquelle la tige filetée (200) entre, par le côté profilé externe (105), dans la portion profilée fermée (106) et sort par l'autre côté profilé (103) de la portion profilée fermée (105) et entre par un des deux côtés d'appui (3) opposés du connecteur d'alignement (1) dans le connecteur d'alignement (1).

8. Disposition selon la revendication 7, dans laquelle la tige filetée (200) comprend, au moins dans une portion d'extrémité opposée à la tête de la tige filetée, un filetage externe avec lequel elle est vissée dans l'au moins un canal de vissage (4), qui comprend un filetage interne.

9. Disposition selon l'une des revendications 6 à 8, dans laquelle la tige filetée (200) s'appuie, avec sa tête de tige filetée, contre le côté profilé externe (105).

10. Disposition selon l'une des revendications précédentes, dans laquelle le connecteur d'alignement (1) comprend un plan de montage (E) avec une série de trous constituée de passages de fixation (9) équidistants entre eux, qui se trouve dans le deuxième plan commun des côtés de montage (102).

11. Disposition selon la revendication 10, dans laquelle les passages de fixation (9) présente entre eux une distance qui correspond à la dimension de la trame d'un perçage systématique des châssis d'armoire de commande (100).

12. Disposition selon la revendication 11, dans laquelle les passages de fixation (9) du connecteur d'alignement (1) sont disposés le long d'une série de trous linéaire et sont réalisés de manière identique aux passages de fixation (104) du perçage systématique, dans laquelle les passages de fixation (9) du connecteur d'alignement (1) et au moins un passage de fixation identique (104) du perçage systématique sont disposés le long d'une droite, dans laquelle une distance entre chacun des passages de fixation (9) du connecteur d'alignement (1) et l'au moins un passage de fixation (104) du perçage systématique correspond à un multiple entier de la dimension de la trame.

13. Disposition selon l'une des revendications précédentes, dans laquelle les nervures profilées (101) sont adjacentes entre elles en formant un interstice étanche (107) et sont conçues comme des nervures d'étanchéité identiques et s'élargissant en direction de leur extrémité libre, dans laquelle, sur une des nervures d'étanchéité, est enfiché un joint d'étanchéité enfichable (108) qui obture de manière étanche aux fluides l'interstice d'étanchéité (107).

14. Disposition selon la revendication 13, dans laquelle les côtés d'appui (3) du connecteur d'alignement (1) présentent une distance qui est légèrement supérieure à la somme des longueurs des nervures profilées (101), de façon à ce que le joint d'étanchéité enfichable (108) présente une compression définie lorsque les autres côtés profilés (103) s'appuient contre les côtés d'appui (3) opposés du connecteur d'alignement (1).
